# EUROPEAN PATENT SPECIFICATION

(11) **EP 0 964 336 B1**
(45) Date of publication and mention of the grant of the patent: **15.01.2003**
(21) Application number: 99109946.6
(22) Date of filing: 20.05.1999
(51) Int. Cl.: G06F 11/30, G06F 3/12

(54) **Method of monitoring the power supply status in a peripheral device connected to a host computer**
Verfahren zur Überwachung des Stromversorgungszustands in einem an einen Hauptrechner angeschlossenen Peripheriegerät
Méthode de surveillance de l'état de l'alimentation dans un périphérique connecté à un ordinateur principal

(30) Priority: 01.06.1998 JP 15143098
(43) Date of publication of application: 15.12.1999
(73) Proprietor: SEIKO EPSON CORPORATION, Shinjuku-ku, Tokyo 163-0811 (JP)
(72) Inventor: Katagiri, Masahiro, Suwa-shi, Nagano-ken 392-8502 (JP)
(74) Representative: Hoffmann, Eckart, Dipl.-Ing.

(56) References cited:
- EP-A- 0 652 533
- US-A- 5 706 411
- "LIMITED TOLERANCE TO POLL RESPONSE DELAYS" IBM TECHNICAL DISCLOSURE BULLETIN,US,IBM CORP. NEW YORK, vol. 34, no. 8, 1992, pages 278-279, XP000302121 ISSN: 0018-8689
- PATENT ABSTRACTS OF JAPAN vol. 006, no. 027 (P-102), 17 February 1982 (1982-02-17) & JP 56 147214 A (CANON INC), 16 November 1981 (1981-11-16)
- PATENT ABSTRACTS OF JAPAN vol. 015, no. 127 (P-1185), 27 March 1991 (1991-03-27) & JP 03 012722 A (TOSHIBA CORP), 21 January 1991 (1991-01-21)

## Description

The present invention relates to a data processing system comprising a host computer and one or more peripheral devices such as a printer, a display device, a scanner etc., connected to the host computer. More particularly, the invention relates to a method of monitoring the power supply status, i.e., whether the power supply is on or off, in a peripheral device that is capable of automatically sending status information to the host computer whenever the power supply voltage in the peripheral device drops below a specified threshold level. The invention also relates to a host computer and a peripheral device capable of performing such method.

Data processing terminals such as point-of-sale (POS) and electronic cash register (ECR) terminals are today commonly equipped with a printer that is connected to a host computer (simply referred to as "host" hereinafter) and is controlled based on command and print data received from the host. The printer has its own power supply that is independent of the host's power supply. The host in such applications typically controls printer operation based on printer status information received from the printer. This status information enables the host to determine the current operating status of the printer, and includes, for example, the printer's power supply voltage, the print head position, whether there is any paper, whether the printer cover is open or closed, and whether paper is being advanced.

The printer starts and stops operating when the user turns the power switch on and off, respectively. Once the printer has been turned on, the host typically cannot determine whether the user has turned the printer off again. As a result, the host might continue sending print data to a printer that has been turned off and, therefore, cannot receive or process the data. The transferred print data will, thus, not be printed.

When a printer that has been turned off is then turned on again, the on/off operation resets the printer so that it can again receive print data from the host. Printer settings are thus reinitialized. As a result, print data that has been sent to the printer based on the printer settings before the printer was turned off may not be printed with the expected results.

EP-A-0 652 533 discloses a printer equipped with two separate command interpreters. Print and command data received from a host are first checked in a first command interpreter as to whether or not they include a so-called real-time command. If not, the data are stored in a receive buffer from which a second command interpreter reads and interprets the data on a FIFO (first-in-first-out) basis. Real-time commands, on the other hand, bypass the receive buffer and are interpreted by the first command interpreter. Real-time commands are executed with priority and can even be executed when the data flow from the receive buffer to the first command interpreter is interrupted because of a wait-state, an error condition or other reason. Real-time commands described in the document include commands requesting the status of the printer. When such printer status request is received, real-time command process means responds by sending the current printer status to the host.

To have the host always informed about the current on/off status of the printer, it is conceivable that the host regularly polls the on/off status of the printer using a real-time command, for instance, such as those disclosed in EP-A-0 652 533. To effectively eliminate the above-noted problems this monitoring operation would have to be frequently repeated, however, and would, therefore, reduce the host's throughput.

EP-A-0 654 757 discloses a printer equipped with a function known as ASB (Automatic Status Back) function. The known printer has detection and transmission means for detecting the status of the printer and for transmitting an ASB report including corresponding status information to a host whenever any of one or more preselected states of the printer changes. With such printer the host is automatically informed about changes in the printer status without having to poll the printer status. The known printer does not send status information, however, that would inform the host that the printer has been turned off or that it has been turned on again after it had been turned off.

While it would be possible to design peripheral devices, such as the printer disclosed in EP-A-0 654 757, so that a device sends information notifying the host that the device was turned off and then on again, this would require adding functionality to the device, and thus cannot be effectively implemented in existing devices.

On the other hand, if a power monitoring function could be designed so as to allow the host to determine the power on/off status of a peripheral device with a change in the host's functionality rather than that of the peripheral device, product design would be made easier, and the power monitoring function could be widely deployed even with existing peripheral devices and, in particular, printers.

US-A-5,706,411 discloses a computer system having a visual display indicating the status of an attached printer. According to this prior art an initial state of the printer is displayed on a host computer's screen and subsequently a status request is sent to the printer. The printer responds to the status request by returning its current status. The host computer receives the printer's current status data and updates the display on its screen correspondingly. The document indicates that where data cannot be sent to the printer dues to a communication error, a screen is displayed suggesting the user should check whether the printer is turned on, is physically connected the host computer or needs to be reset. The document does not explain how the communication error is detected. It further discloses the sending to the printer of a request to return current status information in response to receiving a status change signal.

IBM Technical Disclosure Bulletin, Vol. 34, No. 8, January 1992, pp. 278-279 *"Limited Tolerance to Poll Response Delays"* discloses a system comprising a workstation controller to which plural workstations are connected. The controller polls the workstations checking for a new status. If a workstation does not respond within a certain time, the controller retries polling that workstation a certain number of times and, if there is still no response, assumes that workstation is powered down.

It is an object of the present invention to provide a method of monitoring the power supply status of a peripheral device that allows the host to determine whether the peripheral device is on or off. Another object of the present invention is to provide such method applicable to existing data processing systems by changing functionality on the host side and requiring no change on the side of the peripheral device.

These objects are achieved with a method as claimed in claim 1, a host computer as claimed in claim 11 and a storage medium as claimed in claim 12. Preferred embodiments of the invention are subject-matter of the dependent claims.

Using a printer as an example of a peripheral device, when the printer is turned off (the power supply to the printer is turned off), the printer supply voltage decreases gradually over a certain period of time. When the supply voltage drops below a predetermined threshold level, the printer sends status information, i.e., an ASB report indicating a power supply error, to the host, thereby informing the host that a non-recoverable error has occurred. When the host receives an ASB report that was sent from the printer because of such power supply error or because of any another reason, the host requests the printer to return the current status information. If the ASB report was sent because of the power supply error, the power supply voltage in the printer will have decreased far enough to make the printer inoperative when the request sent by the host reaches the printer, and the printer will not be able to respond to the request. Therefore, if the host does not receive a response, it can determine that printer has been turned off. The make sure that the printer is indeed inoperative at the time the request is sent by the host, the request is preferably sent after lapse of a certain wait period after the ASB report was received.

Other objects and attainments together with a fuller understanding of the invention will become apparent and appreciated by referring to the following description and claims taken in conjunction with the accompanying drawings, in which:
- Fig. 1: illustrates data communication between a printer and a host in a POS system embodying the present invention;
- Fig. 2: is a flow chart illustrating a method according to a first embodiment of the present invention;
- Fig. 3: is a flow chart illustrating a method according to a second embodiment of the present invention;
- Fig. 4: is a flow chart illustrating a method according to a third embodiment of the present invention;
- Fig. 5: is a flow chart illustrating a method according to a fourth embodiment of the present invention, and
- Fig. 6: voltage-versus-time characteristics of a typical printer upon switching off a power supply switch.

Preferred embodiments of the present invention are described below with reference to the accompanying figures. The printer described in these embodiments should be understood as representing one of a variety of peripheral devices to which the present invention may be applied. Necessary adaptations, if any, to other peripheral devices will be obvious to those skilled in the art on the basis of the following description.

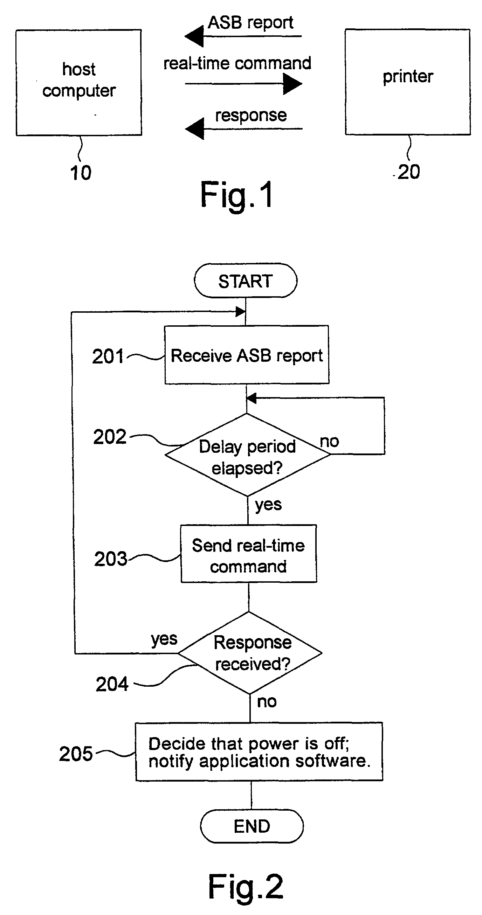

Fig. 1 illustrates data communication between a printer and a host of a POS system embodying the present invention. In this POS system, the host (computer) 10 and the printer 20 for printing receipts, for example, are connected via an interface enabling two-way communication between host 10 and printer 20, e.g., the RS-232C interface.

The printer 20 has an ASB function for automatically sending printer status reports (referred to as "ASB report(s)" in this text) to the host 10 without waiting for a status information request from the host 10. The status information that is returned to the host 10 by the ASB function is preset by the host 10 in the printer 20. When there is a change in any status information reported by the ASB function, the printer 20 automatically sends an ASB report to the host 10. By thus automatically receiving status information from the printer 20, the host 10 can send command and print data and control the printer 20 based on the information included in the ASB reports without specifically requesting status information from the printer 20.

Exemplary status information that is sent by the ASB function includes: abnormal voltage errors, CPU execution errors, problems with the print head temperature detection thermistor, print head home position detection errors, printer cover open errors, carriage adjustment error, and other types of error information. Error information included in this status information can be divided into three groups based on differences in the ability of the printer to recover from the error. These three groups are automatic recovery errors, recoverable errors, and non-recoverable errors. When one of these printer errors occurs, the host is notified of the error type by setting a respective error bit in the status report.

An abnormal voltage error, such as when the supply voltage of the printer drops below a threshold voltage below which normal printer operation can be impaired, is one example of a non-recoverable error. When an abnormal voltage error occurs, the host 10 is notified both that an abnormal voltage error has occurred and the error is non-recoverable by setting appropriate bits in the ASB report. While the structure of the ASB report is not critical to the practice of the present invention, as an example, the ASB report comprises a 4-byte (32-bit) data stream, and bits for non-recoverable errors are stored in byte 2.

As explained above, the host 10 receives ASB reports from the printer 20. In addition, the host 10 has a real-time status request function for sending a real-time command to the printer 20 instructing the printer 20 to return the current status information. When the printer 20 receives this real-time command, it responds by immediately returning the current printer status information. To distinguish from the ASB report, the status information returned by the printer in response to such real-time command is be referred to as "on-demand status report" in this text.

A host 10 according to the present invention uses the printer status information included in the ASB reports as well as the printer's response to a command requesting an on-demand status report, to monitor when the printer has been turned off. This is to detect the printer on/off status with no time delay.

Fig. 2 is a flow chart illustrating a method of monitoring the power supply status according to a first embodiment of the invention. By carrying out this method, the host 10 detects when the printer has been turned off, and notifies the application software running on the host accordingly. This is described in detail below.

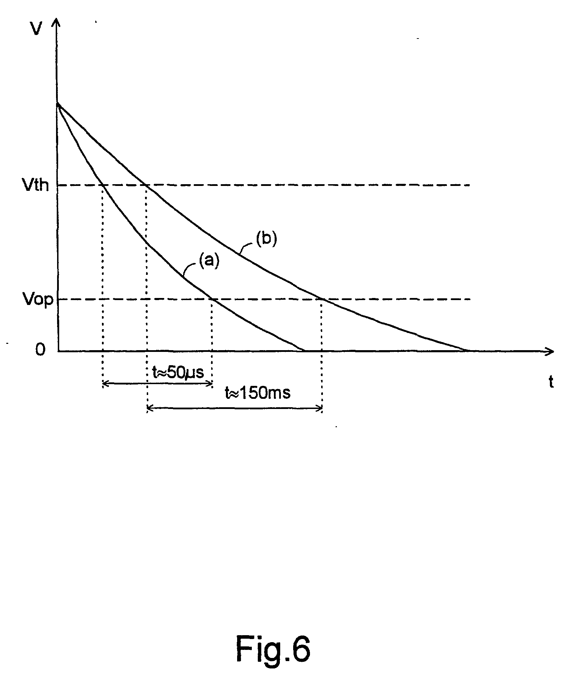

When printer 20 is in use and the user then turns the printer off, a supply voltage drop is detected when the supply voltage has decreased below a certain threshold level Vth (see Fig. 6) but before it has decreased to zero or a level Vop (see Fig. 6) at which the printer becomes completely inoperative. As a result, the ASB function of the printer 20 sends an ASB report to the host 10 to report a non-recoverable error. After the host 10 receives this ASB report (step 201), it waits for a specific wait period (step 202), and then sends a real-time command to the printer 20 to request an on-demand status report from the printer (step 203).

The wait period in step 202 must be long enough to allow the supply voltage of the printer to drop from the threshold level Vth at which the non-recoverable error is reported to the host, to the level Vop at which the printer becomes inoperative. This delay time varies according to the printer status at the time the power switch was turned off. For example, if the printer is in a high load state (characteristic (a) in Fig. 6) because printing is in progress when the power is turned off, the delay time is relatively short, e.g., 50 µs or so. On the other hand, if the printer is in a low load state (characteristic (b) in Fig. 6) such as a standby mode when the power is turned off, the delay time may be as long as 150 ms. As a result, the wait period of step 202 is preferably greater than 150 ms. Such a wait period assures a reliable detection of whether or not the printer is turned off. It is to be noted that the wait period should not be much longer than is necessary to achieve a reliably detection, because an unnecessary late detection of the printer-off-status might jeopardize the aim of the invention to prevent misprinting.

If the printer's ASB function sends an ASB report to the host 10 because the printer 20 was turned off, the printer 20 will be completely off when the host 10 sends the real-time command to the printer 20. The printer 20 will therefore not be able to receive and answer the real-time command. If the host 10 does not receive a response to the real-time command from the printer 20 within a predetermined period after sending the real-time command (step 204), the host 10 can decide that the printer is off, and so notify the application software running on the host (step 205). As described above, the ASB function of the printer 20 can also send ASB reports for other reasons, including paper jam errors. In this case, the printer 20 returns an on-demand status report when a corresponding real-time command is received from the host 10. The host 10 can therefore determine that printer 20 is not off.

As will be appreciated by those skilled in the art, the use of a real-time command by the host device to initiate an on-demand status report from the printer is advantageous because the printer may be switched on but for other reasons not be able to respond to a normal command queued in the printers receive buffer. Nevertheless, there may be cases where a real-time command in the sense explained above is not required and the on-demand status report is sent in response to a normal command. While this may be true for printers, it is particularly true for other kinds of peripheral device. The ability of the host and of the printer or other peripheral device to process real-time commands should, therefore, be understood as according to a preferred implementation of the invention only and not essential to the invention in its broadest aspect. This applies to the following embodiments as well as to the preceding one.

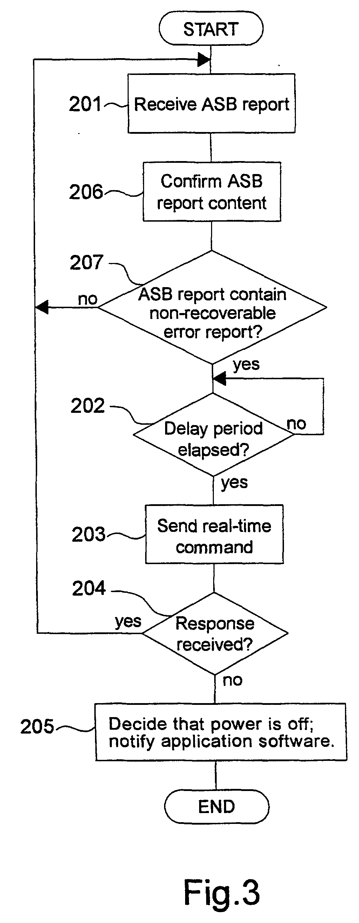

Fig. 3 is a flow chart of a second embodiment of the method according to the present invention. This method differs from that of the first embodiment in that a further step is provided for evaluating the content of the ASB report before a real-time command is sent to the printer. This is described in further detail below.

When the printer 20 is in use and the user then turns the printer off, the ASB function of the printer 20 sends an ASB report to the host 10 reporting a non-recoverable error as in the first embodiment. After the host 10 receives this ASB report (step 201), it reads the status information included in the ASB report (step 206) and determines whether the non-recoverable error bit is set in the ASB report (step 207). If the non-recoverable error bit is set, indicating that the ASB report was sent because of a non-recoverable error, the host 10 waits for the specific wait period (step 202), and then sends a real-time command to the printer 20 (step 203) as described above for the first embodiment. However, if the non-recoverable error bit is not set in step 207, indicating that the ASB report was not sent due to a non-recoverable error, the host 10 knows that the printer 20 is not off. The host 10 therefore waits for the next ASB report. Note that steps 204 and 205 in the second embodiment that allow the host to determine whether or not the printer is turned off, are the same as those in the first embodiment.

The method according to the second embodiment does not send a real-time command to the printer when an ASB report is received but the report is not due to a non-recoverable error. Unnecessary transmissions of real-time commands are thus avoided, and an increase in processing demands imposed on the host and printer by sending and responding to such commands is thus also avoided.

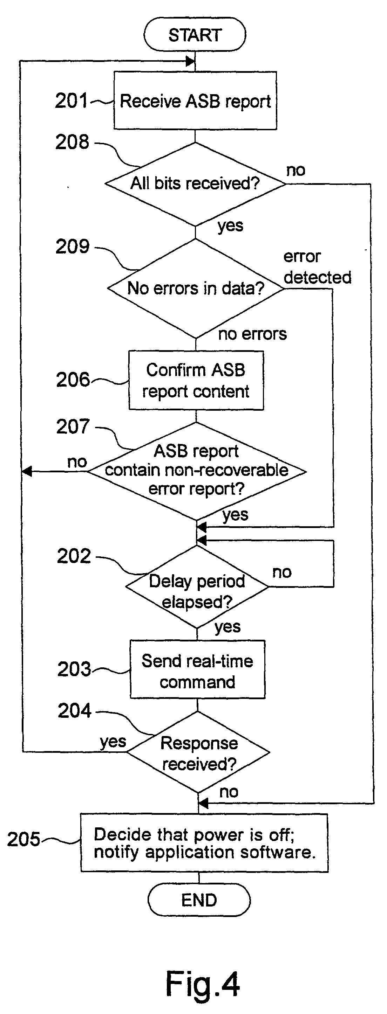

Fig. 4 is a flow chart of a method according to a third embodiment of the present invention. This method differs from the second embodiment in that in addition to evaluating the content of the ASB report, a further step is provided for handling cases in which only an incomplete ASB report is received. This is described in further detail below.

When the printer 20 is in use and the user then turns the printer off, the ASB function of the printer 20 sends an ASB report to the host 10 reporting a non-recoverable error, in the same way as in the first and second embodiments (step 201). The host 10 then leaves the communication port in a data receive condition for the time needed to receive all data in the ASB report (step 208). It should be noted that the ASB report has a predetermined length, e.g., 4 bytes long.

If the load on the printer's power supply is high when the printer is turned off, the delay time until the power supply voltage has decreased to a level (Vop in Fig. 6) at which the printer can no longer operate can be extremely short. This means that the supply voltage of the printer may drop below the level required for data transmission before all bits in the ASB report could be sent, and data transmission may therefore be terminated with only part of the data sent. It is extremely rare for an ASB report to be interrupted if the power has not been turned off. The host 10 therefore determines that the printer has been turned off if the ASB report is not completely received, and so notifies the application software running on the host without sending a real-time command to the printer (step 205). It will be obvious that it is not necessary to evaluate the status information in the ASB report or to send a real-time command to the printer in this case.

If all bits of the ASB report are received in step 208, the host 10 performs parity check and checksum operations to determine if there is a data error in the received data (step 209). If a data error is detected, the content of the ASB report cannot be correctly interpreted. Steps 206 and 207, which are the same as those in the second embodiment, are therefore skipped, and the host 10 waits for the specific wait period (step 202) and then sends a real-time command to the printer 20 (step 203). The remaining steps 204 and 205 are the same as those in the first and second embodiments.

If no data error is detected in step 209, the host 10 reads the status information in the ASB report (step 206) to determine whether the non-recoverable error bit is set (step 207). Steps 202 to 204 are not executed if the non-recoverable error bit is not set. Otherwise, the host 10 determines the printer to be off in step 204 if no response is received to the real-time command sent in step 203 as described above.

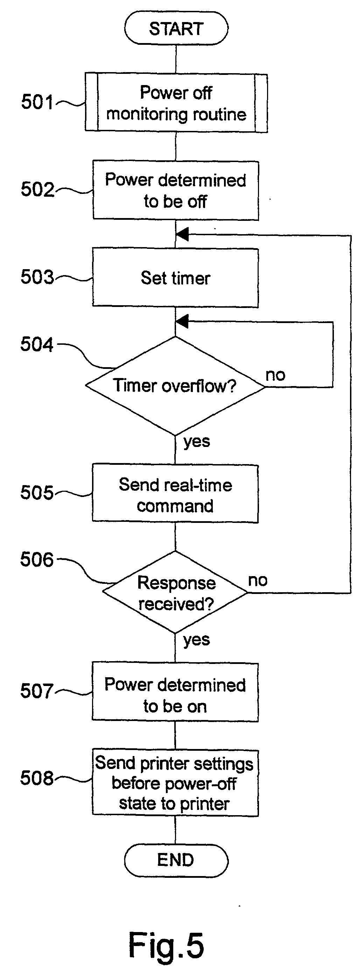

Fig. 5 is a flow chart of a method according to a fourth embodiment of the invention. By this method the host 10 can detect that the printer has been turned on again after detecting that printer had been turned off. The method shown in Fig. 5 is applicable to each of the preceding first to third embodiments of the invention.

Whether printer 20 has been turned off is monitored in step 501 using any of the methods described above. When the host thus determines that the printer is off (step 502), a timer for sending a real-time command is set (step 503). When a predetermined time interval has elapsed (step 504), the host 10 sends a real-time command to the printer 20 to detect whether the printer 20 is now on (step 505). If the printer 20 is still off, the printer cannot respond to this real-time command. Control therefore loops back to step 503, and the host 10 continues to send real-time commands at the predetermined time interval (steps 503 to 506 are repeated) until a response is received from the printer 20.

When a user turns the printer 20 on again, the printer can respond to the real-time command. When a response is thus received (step 506), the host 10 determines the printer 20 to be on (step 507). The host 10 then sends to the printer the printer settings in use before printer was turned off, thereby resetting the printer 20 to its condition before it was turned off (step 508). While the printer settings are stored in printer memory as long as the printer is on, they are reinitialized when the printer is turned off and on. Resending the printer settings makes it possible to restore the printer settings and thereby resume printing appropriately.

According to the above description, the method according to the fourth embodiment monitors whether the printer has been turned on again after it was turned off by repeatedly sending a real-time command to the printer at a predetermined time interval. It is also possible, however, to monitor the printer-on-status by preceding data transmissions to the printer with such real-time command whenever it is necessary for the host to send data to the printer. In other words, the host need not send such real-time commands to the printer unless the printer is to be used, i.e., data is to be sent to the printer.

As described above, it is possible by means of a power monitoring method according to the present invention to determine on the host side whether the printer power is turned on or off. It is therefore possible to assure appropriate printing even when a printer is reset as a result of the printer being turned off and then on while the printer is in use.

It is also possible by means of the present invention to monitor the printer power status by changing only host function, and not changing printer function. The power monitoring method of the present invention can, therefore, be used in existing printer systems with minimal design change, provided the existing printers are capable of automatically sending ASB reports and of responding to commands sent from the host.

The power monitoring method according to the present invention can inform and detect a change in the power on/off status with minimal time lag by using the printer's ASB function and real-time command function for power monitoring.

## Claims

1. A method performed by a host computer (10) in a data processing system comprising the host computer and a peripheral device (20) connected to it, for monitoring the power supply status in the peripheral device, wherein the peripheral device is adapted to send status information to the host computer in response to the power supply voltage in the peripheral device falling below a specific threshold level (Vth), said method comprising:
(a) receiving said status information,
(b) sending, in response to step (a), to the peripheral device a request to return current status information,
(c) detecting whether or not a response is received to the request in step (b), and
(d) determining that the power supply in the peripheral device has been turned off if no response is detected in step (c).

2. The method as set forth in claim 1, wherein step (b) is performed when a predetermined wait period has lapsed after said status information was received in step (a), wherein said wait period is selected to be equal to or longer than an inherent delay time in the peripheral device (20) determined by the power supply voltage dropping, in response to the power supply having been turned off, from said threshold level (Vth) to a level (Vop) at which the peripheral device is no longer operable.

3. The method as set forth in claim 1 or 2, wherein
step (a) comprises a step (a1) of detecting whether or not the received status information is complete,
steps (b) to (d) are performed only if the received status information is detected to be complete in step (a1), and
(e) it is determined that the power supply in the peripheral device (20) has been turned off if the received status information is detected in step (a1) to be incomplete.

4. The method as set forth in claim 1 or 2, wherein
step (a) comprises a step (a2) of detecting whether or not the received status information indicates a non-recoverable error, including a drop of the power supply voltage below said threshold level (Vth), and
steps (b) to (d) are carried out only if an indication of a non-recoverable error is detected in step (a1).

5. The method as set forth in claims 3 and 4, wherein step (a1) is performed prior to step (a2) and step (a2) is performed only if the received status information is detected to be complete in step (a1).

6. The method as set forth in claim 5, wherein step (a1) includes checking the completely received status information for data errors, and wherein the method comprises performing step (a2) if no data errors are found, and jumping to step (b) while skipping step (a2) when data errors are found.

7. The method as set forth in any one of the preceding claims, further comprising the step of
(e) detecting whether or not the power supply in the peripheral device (20) has been turned on,
step (e) being performed after the power supply in the peripheral device has been determined to be turned off.

8. The method as set forth in claim 7, wherein step (e) comprises:
(e1) sending to the peripheral device a request to return current status information,
(e2) detecting whether or not a response is received to the request in step (e1), and
(e3) determining that the power supply in the peripheral device has been turned on if a response is detected in step (e2).

9. The method as set forth in claim 7 or 8, wherein step (e) is performed immediately before the host computer (10) sends data to the peripheral device (20).

10. The method as set forth in claim 7 or 8, wherein step (e) is repeated at a specific time interval until the power supply in the peripheral device (20) is found to have been turned on again.

11. A host computer for carrying out the method defined in claim 1, comprising:
receiving means for receiving said status information sent from the peripheral device (20),
request means for sending a request to return the current status information to the peripheral device in response to said receiving means received status information,
detection means for detecting a response from the peripheral device to the request sent by said request means,
determining means for determining that the power supply in the peripheral device is turned off if no response is detected by said detection means.

12. A storage medium carrying in machine-readable form a control program which when executed in a host computer according to claims 11 implements the method as defined in any one of claims 1 to 10.

## Patentansprüche

1. Verfahren, das von einem Host-Computer (10) in einem Datenverarbeitungssystem ausgeführt wird, das den Host-Computer und ein an ihn angeschlossenes Peripheriegerät (20) umfaßt, zum Überwachen des Stromversorgungsstatus in dem Peripheriegerät, wobei das Peripheriegerät so ausgebildet ist, daß es Statusinformation an den Host-Computer in Antwort darauf senden kann, daß die Speisespannung in dem Peripheriegerät unter einen speziellen Schwellenwertpegel (Vth) abfällt, wobei das Verfahren umfaßt:
(a) Empfangen der Statusinformation,
(b) Senden, in Antwort auf Schritt (a), einer Anforderung an das Peripheriegerät, aktuelle Statusinformation zurückzusenden,
(c) Erfassen, ob auf die Anforderung in Schritt (b) eine Antwort empfangen wird oder nicht, und
(d) Entscheiden, daß die Stromversorgung in dem Peripheriegerät abgeschaltet worden ist, wenn in Schritt (c) keine Antwort erfaßt worden ist.

2. Verfahren nach Anspruch 1, bei dem Schritt (b) ausgeführt wird, wenn eine vorbestimmte Warteperiode verstrichen ist, nachdem die Statusinformation in Schritt (a) empfangen wurde, wobei die Warteperiode so ausgewählt ist, daß sie gleich oder länger als eine inhärente Verzögerungszeit in dem Peripheriegerät (20) ist, die durch den Speisespannungsabfall infolge des Abschaltens der Stromversorgung von dem Schwellenwertpegel (Vth) auf einen Pegel (Vop), bei dem das Peripheriegerät nicht mehr betriebsbereit ist, bestimmt ist.

3. Verfahren nach Anspruch 1 oder 2, bei dem
Schritt (a) einen Schritt (a1) des Erfassens umfaßt, ob die empfangene Statusinformation vollständig ist oder nicht,
die Schritte (b) bis (d) nur ausgeführt werden, wenn die empfangene Statusinformation in Schritt (a1) als vollständig erfaßt wird, und
(e) es entschieden wird, daß die Stromversorgung in dem Peripheriegerät (20) abgeschaltet worden ist, wenn die empfangene Statusinformation in Schritt (a1) als unvollständig erfaßt wird.

4. Verfahren nach Anspruch 1 oder 2, bei dem
Schritt (a) einen Schritt (a2) des Erfassens umfaßt, ob die empfangene Statusinformation auf einen nicht-behebbaren Fehler einschließlich eines Abfalls der Speisespannung unter den Schwellenwertpegel (Vth) hinweist oder nicht, und
die Schritte (b) bis (d) nur ausgeführt werden, wenn ein Hinweis auf einen nicht-behebbaren Fehler in Schritt (a1) erfaßt wird.

5. Verfahren nach den Ansprüchen 3 und 4, bei dem Schritt (a1) vor dem Schritt (a2) ausgeführt wird und Schritt (a2) nur ausgeführt wird, wenn die empfangene Statusinformation in Schritt (a1) als vollständig erfaßt wird.

6. Verfahren nach Anspruch 5, bei dem Schritt (a1) das Überprüfen der vollständig empfangenen Statusinformation auf Datenfehler enthält und bei dem das Verfahren das Ausführen des Schritts (a2), wenn keine Datenfehler gefunden werden, und das Springen zu Schritt (b) unter Überspringen von Schritt (a2) umfaßt, wenn Datenfehler gefunden werden.

7. Verfahren nach einem der vorhergehenden Ansprüche, ferner umfassend den Schritt
(e) des Erfassens, ob die Stromversorgung in dem Peripheriegerät (20) eingeschaltet worden ist oder nicht,
wobei Schritt (e) ausgeführt wird, nachdem die Stromversorgung in dem Peripheriegerät als ausgeschaltet entschieden worden ist.

8. Verfahren nach Anspruch 7, bei dem Schritt (e) umfaßt:
(e1) Senden einer Anforderung an das Peripheriegerät, die aktuelle Statusinformation zurückzusenden,
(e2) Erfassen ob eine Antwort auf die Anforderung in Schritt (e1) empfangen worden ist oder nicht, und
(e3) Entscheiden, daß die Stromversorgung in dem Peripheriegerät eingeschaltet worden ist, wenn eine Antwort in Schritt (e2) erfaßt worden ist.

9. Verfahren nach Anspruch 7 oder 8, bei dem Schritt (e) ausgeführt wird, unmittelbar bevor der Host-Computer (10) Daten an das Peripheriegerät (20) sendet.

10. Verfahren nach Anspruch 7 oder 8, bei dem Schritt (e) in speziellen Zeitintervallen wiederholt wird, bis die Stromversorgung in dem Peripheriegerät (20) als wieder eingeschaltet festgestellt worden ist.

11. Host-Computer zum Ausführen des in Anspruch 1 definierten Verfahrens, umfassend:
eine Empfangsanordnung zum Empfangen der Statusinformation, die von dem Peripheriegerät (20) gesendet wurde,
eine Anforderungsanordnung zum Senden einer Anforderung an das Peripheriegerät, in Antwort auf die von der Empfangsanordnung empfangene Statusinformation die aktuelle Statusinformation zurückzusenden,
eine Erfassungsanordnung zum Erfassen einer Antwort von dem Peripheriegerät auf die durch die Anforderungsanordnung gesendete Anforderung,
eine Entscheidungsanordnung zum Entscheiden, daß die Stromversorgung in dem Peripheriegerät abgeschaltet ist, wenn keine Antwort von der Erfassungsanordnung erfaßt wird.

12. Speichermedium, das in maschinenlesbarer Form ein Steuerprogramm trägt, das bei Ausführung in einem Host-Computer gemäß Anspruch 11 das in einem der Ansprüche 1 bis 10 definierte Verfahren implementiert.

## Revendications

1. Procédé exécuté par un ordinateur principal (10) dans un système de traitement de données comprenant l'ordinateur principal et un périphérique (20), qui lui est connecté, pour surveiller l'état de l'alimentation électrique du périphérique, dans lequel le périphérique est conçu pour envoyer des informations d'état à l'ordinateur principal en réponse au fait que la tension d'alimentation du périphérique tombe en-dessous d'un niveau seuil spécifique (Vth), le procédé comprenant les étapes qui consistent en :
(a) la réception des informations d'état,
(b) l'envoi, en réponse à l'étape (a), au périphérique d'une demande de renvoi des informations d'état actuel,
(c) la détection du fait de savoir si une réponse à la demande de l'étape (b) est ou non reçue, et
(d) la détermination du fait que l'alimentation du périphérique a été coupée si aucune réponse n'est détectée à l'étape (c).

2. Procédé selon la revendication 1, dans lequel l'étape (b) est exécutée lorsqu'une durée prédéterminée d'attente s'est écoulée après la réception des informations d'état à l'étape (a), dans lequel la période d'attente est choisie de façon à être supérieure ou égale à un retard inhérent du périphérique (20), déterminé par la chute de tension d'alimentation, en réponse au fait que l'alimentation a été coupée, du niveau seuil (Vth) à un niveau (Vop) auquel le périphérique ne peut plus fonctionner.

3. Procédé selon la revendication 1 ou 2, dans lequel
l'étape (a) comprend une étape (a1) de détection du fait de savoir si les informations d'état reçues sont ou non complètes,
les étapes (b) à (d) sont exécutées uniquement s'il est détecté, à l'étape (a1), que les informations d'état reçues sont complètes, et
(e) il est déterminé que l'alimentation du périphérique (20) a été coupée s'il est détecté, à l'étape (a1), que les informations d'état reçues sont incomplètes.

4. Procédé selon la revendication 1 ou 2, dans lequel
l'étape (a) comprend une étape (a2) destinée à détecter si les informations d'état reçues indiquent ou non une erreur irréparable, incluant une chute de la tension d'alimentation en-dessous du niveau seuil (Vth), et
les étapes (b) à (d) sont exécutées uniquement si une indication d'erreur irréparable est détectée à l'étape (a2).

5. Procédé selon les revendications 3 et 4, dans lequel l'étape (a1) est exécutée avant l'étape (a2) et l'étape (a2) est exécutée uniquement s'il est détecté, à l'étape (a1), que les informations d'état reçues sont complètes.

6. Procédé selon la revendication 5, dans lequel l'étape (a1) inclut une étape consistant à vérifier si les informations d'état reçues complètement contiennent des erreurs de données, et qui comprend l'exécution de l'étape (a2) si aucune erreur de données n'a été trouvée, et un saut à l'étape (b), en sautant l'étape (a2), si des erreurs de données ont été trouvées.

7. Procédé selon l'une quelconque des revendications précédentes, comprenant en outre l'étape consistant à
(e) détecter si l'alimentation du périphérique (20) a été ou non activée,
l'étape (e) étant exécutée après qu'il a été déterminé que l'alimentation du périphérique a été coupée.

8. Procédé selon la revendication 7, dans lequel l'étape (e) comprend :
(e1) l'envoi au périphérique d'une demande de renvoi des informations d'état actuel,
(e2) la détection du fait de savoir si une réponse à la demande de l'étape (e1) est ou non reçue, et
(e3) la détermination du fait que l'alimentation du périphérique a été activée si une réponse est détectée à l'étape (e2).

9. Procédé selon la revendication 7 ou 8, dans lequel l'étape (e) est exécutée immédiatement avant que l'ordinateur principal (10) envoie des données au périphérique (20).

10. Procédé selon la revendication 7 ou 8, dans lequel l'étape (e) est répétée à un intervalle spécifique de temps jusqu'à ce qu'il soit détecté que l'alimentation du périphérique (20) a été de nouveau activée.

11. Ordinateur principal destiné à mettre en oeuvre le procédé défini dans la revendication 1, comprenant :
un moyen de réception destiné à recevoir les informations d'état envoyées par le périphérique (20),
un moyen de requête destiné à envoyer une demande de renvoi des informations d'état actuel au périphérique en réponse aux informations d'état reçues par le moyen de réception,
un moyen de détection destiné à détecter une réponse, provenant du périphérique, à la demande envoyée par le moyen de requête,
un moyen de détermination destiné à déterminer que l'alimentation du périphérique est coupée si aucune réponse n'est détectée par le moyen de détection.

12. Support de stockage portant , sous une forme lisible par machine, un programme de commande qui, lorsqu'il est exécuté sur un ordinateur principal selon la revendication 11, met en oeuvre le procédé défini dans l'une quelconque des revendications 1 à 10.
